# FASCICULE DE BREVET EUROPEEN

(11) **EP 3 102 865 B1**
(45) Date de publication et mention de la délivrance du brevet: **25.04.2018**
(21) Numéro de dépôt: 15702439.9
(22) Date de dépôt: 28.01.2015
(51) Int. Cl.: F16L 19/02

(54) **BAGUE D'ACCROCHAGE D'UNE CANALISATION À UN CORPS TUBULAIRE ET MOYENS DE CONNEXION COMPORTANT UNE TELLE BAGUE**
RING ZUR BEFESTIGUNG EINES ROHRES AN EINEM ROHRFÖRMIGEN KÖRPER UND VERBINDUNGSMITTEL MIT SOLCH EINEM RING
RING FOR FASTENING A PIPE TO A TUBULAR BODY AND CONNECTION MEANS COMPRISING SUCH A RING

(30) Priorité: 06.02.2014 FR 1450929
(43) Date de publication de la demande: 14.12.2016
(73) Titulaire: Parker Hannifin Manufacturing France SAS, 74112 Annemasse (FR)
(72) Inventeur: GAILLARD, Alain, F-35170 Bruz (FR); MUSELLEC, Jean-Noël, F-35131 Chartres de Bretagne (FR); AVERTY, Yoann, F-44130 Blain (FR); FOUCHE, David, F-35330 Maure de Bretagne (FR); LEROYER, Cyril, F-35760 Montgermont (FR)
(74) Mandataire: Lavialle, Bruno François Stéphane
(86) Numéro de dépôt international: PCT/EP2015/051736
(87) Numéro de publication internationale: WO 2015/117874

(56) Documents cités:
- EP-A1- 1 085 245
- WO-A1-98/30825
- US-A- 4 127 289
- US-B1- 6 305 054

## Description

L'invention concerne une bague d'accrochage d'une canalisation à un corps tubulaire. L'invention concerne également des moyens de connexion d'une canalisation à un corps tubulaire comportant une telle bague d'accrochage.

### ARRIERE-PLAN TECHNOLOGIQUE DE L'INVENTION

Pour permettre le raccordement de deux canalisations entre elles, il est connu d'utiliser un corps tubulaire ayant une première extrémité agencée pour recevoir une extrémité de l'une des canalisations et une deuxième extrémité agencée pour recevoir une des extrémités de l'autre des canalisations.

Afin d'assurer le blocage des extrémités des canalisations dans les extrémités correspondantes du corps tubulaire ainsi que l'étanchéité de ces raccordements, on connaît des moyens de connexion comprenant un manchon divisé en des première et deuxième parties axialement successives pourvues de moyens pour assurer la liaison de ces parties, de manière étanche et démontable, respectivement à l'extrémité du corps tubulaire et à la canalisation. Les moyens de connexion comprennent de plus une bague d'accrochage qui est conformée pour être bloquée axialement sur la canalisation en retrait de l'extrémité de celle-ci. La bague d'accrochage permet de constituer un épaulement de butée à l'enfoncement de la canalisation dans le corps tubulaire et un épaulement de butée axiale entre la deuxième partie du manchon et la canalisation.

Le document EP-A-1 085 245 de la demanderesse décrit de tels moyens de connexion et notamment une bague d'accrochage se présentant sous la forme de deux demi-bagues solidarisées ensemble par un anneau élastique.

### OBJET DE L'INVENTION

Un but de l'invention est de proposer une bague d'accrochage qui s'avère simple à monter sur une canalisation à raccorder à un corps tubulaire et des moyens de connexion comportant une telle bague.

### BREVE DESCRIPTION DE L'INVENTION

En vue de la réalisation de ce but, on propose une bague d'accrochage d'une canalisation à un corps tubulaire.

Selon l'invention, la bague comporte deux secteurs rigides qui sont articulés l'un à l'autre par au moins une portion annulaire déformable élastiquement, les deux secteurs et la portion étant d'un seul tenant, chaque secteur ayant une face interne en saillie de laquelle s'étend radialement au moins un plot d'ancrage destiné à être reçu dans un logement ménagé de façon correspondante dans une paroi de la canalisation, chaque plot d'ancrage comportant deux rainures s'étendant circonférentiellement de part et d'autre dudit plot d'ancrage..

Ainsi, la bague selon l'invention est d'une seule pièce ce qui facilite son montage sur une canalisation. En effet, un opérateur n'a qu'à déformer la portion annulaire pour écarter suffisamment les deux secteurs rigides l'un de l'autre afin d'engager latéralement la bague sur la canalisation. L'opérateur peut éventuellement n'avoir besoin que d'une seule de ses deux mains pour agencer la bague sur ladite canalisation.

En outre, la coopération des plots avec les logements correspondants permet d'assurer le blocage axial de la bague sur la canalisation, les rainures permettent d'assurer un meilleur ancrage des plots dans les logements. En effet, sous la pression du fluide circulant dans la canalisation, la paroi de la canalisation va pénétrer à l'intérieur des rainures des plots assurant ainsi un verrouillage des plots dans les logements.

L'invention a également pour objet des moyens de connexion d'une canalisation à un corps tubulaire ayant une extrémité agencée pour recevoir une extrémité de la canalisation. Les moyens de connexion comprennent un manchon divisé en des première et deuxième parties axialement successives pourvues de moyens pour assurer la liaison de ces parties étanche et démontable respectivement à l'extrémité du corps tubulaire et à la canalisation, et une bague du type précité.

### BREVE DESCRIPTION DES DESSINS

L'invention sera mieux comprise à la lumière de la description qui suit d'un mode de réalisation particulier, non limitatif, de l'invention.

Il sera fait référence aux figures ci-jointes, parmi lesquelles :
- la figure 1 est une vue en perspective de la bague d'accrochage selon l'invention,
- la figure 2 est une vue de côté de la bague illustrée à la figure 1,
- la figure 3 est une vue du dessus de la bague illustrée à la figure 1,
- la figure 4 est une vue en coupe de la bague illustrée à la figure 1,
- la figure 5 est une vue en perspective de la bague illustrée à la figure 1 avant son montage sur une canalisation reçue à une extrémité dans un corps tubulaire,
- la figure 6 est une vue en coupe de la bague montée sur la canalisation de la figure 5.

### DESCRIPTION DETAILLEE DE L'INVENTION

L'invention telle qu'elle va être décrite à présent est adaptée à participer au raccordement d'une canalisation 1 à un corps tubulaire 2.

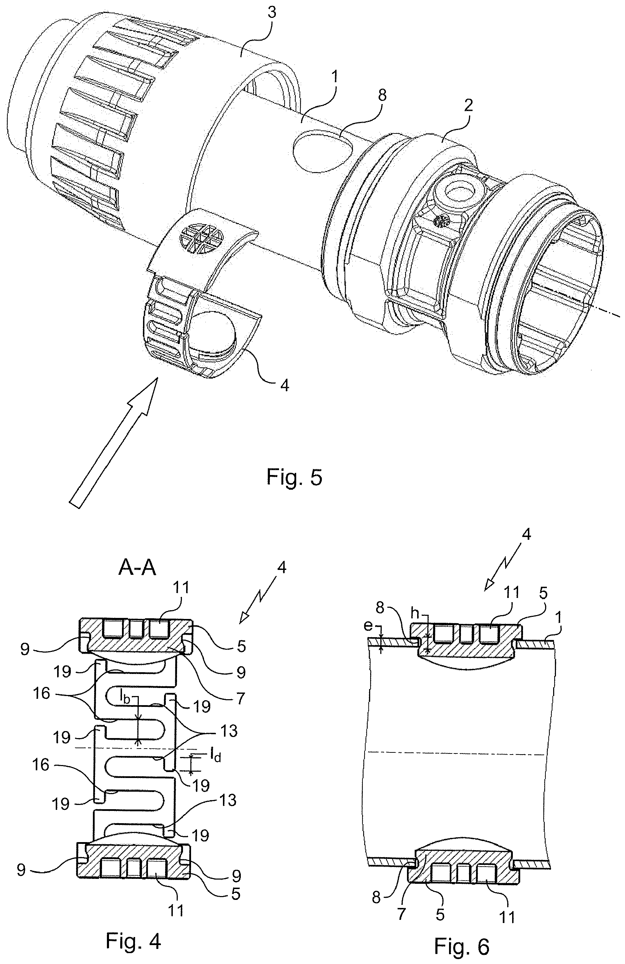

En référence à la figure 5, des moyens de connexion de la canalisation 1 au corps tubulaire 2 comprennent ici un manchon 3 divisé en des première et deuxième parties axialement successives pourvues de moyens pour assurer la liaison de ces parties, de manière étanche et démontable, respectivement à l'extrémité du corps tubulaire 2 et à l'extrémité de la canalisation 1. Un tel manchon 3 étant bien connu de l'art antérieur, il ne sera pas davantage détaillé ici.

Les moyens de connexion comportent également une bague d'accrochage selon l'invention, généralement désignée en 4, qui permet ici de constituer un épaulement de butée à l'enfoncement de la canalisation 1 dans le corps tubulaire 2 et un épaulement de butée axiale entre la deuxième partie du manchon 3 et la canalisation 1.

Ainsi, pour raccorder la canalisation 1 au corps tubulaire 3, un opérateur monte le manchon 3 sur l'extrémité de la canalisation 1 et installe la bague 4 sur la canalisation. Puis, l'opérateur insère ladite extrémité dans l'extrémité du corps tubulaire 2. L'opérateur vient ensuite visser le manchon 3 sur le corps tubulaire 2, le manchon 3 venant alors coopérer avec ladite bague 4 pour assurer un raccordement complet du corps tubulaire 3 à la canalisation 1.

Le corps tubulaire 3 est ensuite raccordé à son autre extrémité à une autre canalisation ou à un organe fonctionnel, tel qu'une vanne ou un filtre, non visible ici.

La bague d'accrochage 4 selon l'invention va être à présent détaillée.

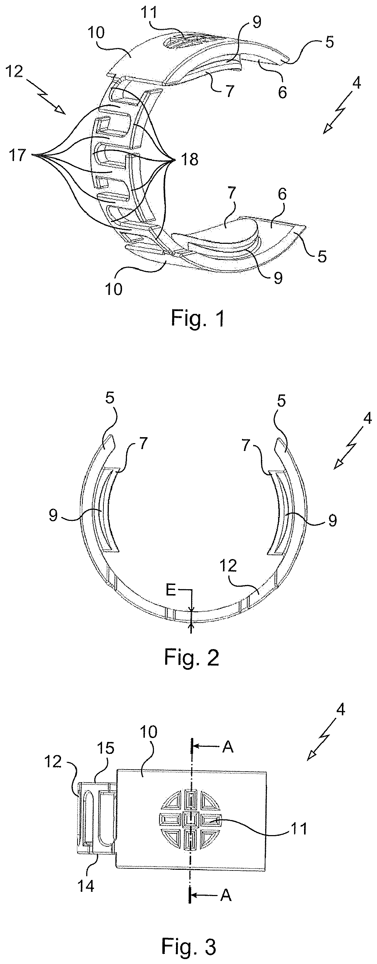

En référence aux figures 1 à 4, la bague 4 comporte deux secteurs rigides 5 ayant un profil en arc-de-cercle pour épouser la surface externe de la canalisation.

Les deux secteurs 5 sont ici identiques entre eux.

Selon l'invention, chaque secteur 5 a une face interne 6 en saillie de laquelle s'étend radialement au moins un plot d'ancrage 7 destiné à être reçu dans un logement 8 ménagé de façon correspondante dans une paroi de la canalisation 1 (comme plus visible aux figures 5 et 6).

La coopération des plots 7 avec les logements 8 correspondants permet d'assurer le blocage axial de la bague 4 sur la canalisation 1 en retrait ici de l'extrémité de ladite canalisation 1.

Selon l'invention, chaque plot d'ancrage 7 comporte deux rainures 9 s'étendant circonférentiellement de part et d'autre dudit plot d'ancrage 7.

Chaque plot 7 a ici une hauteur (hauteur définie selon une direction axiale du plot d'ancrage 7 considéré) supérieure à l'épaisseur e de la paroi de la canalisation 1 (épaisseur définie selon une direction radiale de la canalisation) et chaque rainure 9 a une largeur h (largeur définie selon une direction axiale du plot d'ancrage 7 considéré et selon une direction transversale de la rainure mesurée entre les bords de celle-ci) au moins équivalente à l'épaisseur e de ladite paroi.

Les rainures 9 permettent d'assurer un meilleur ancrage des plots 7 dans les logements 8. En effet, sous la pression du fluide circulant dans la canalisation 1, la paroi de la canalisation 1 va pénétrer à l'intérieur des rainures 9 des plots 7 assurant ainsi un verrouillage des plots 7 dans les logements 8. Il est entendu que la rainure 9 peut avoir des flancs parallèles ou de préférence convergents en direction du fond de la rainure (dans ce cas, il suffit que la paroi de la canalisation pénètre partiellement dans la rainure).

Selon un mode de réalisation particulier, chaque face externe 10 de chaque secteur 5, opposée à la face interne 6 du secteur considéré 5, comporte une zone partiellement évidée 11.

La zone partiellement évidée 11 permet par exemple d'éviter des retassures lors de la fabrication de la bague 4 par moulage.

De préférence, chaque zone 11 est agencée sur la face externe 10 du secteur 5 considéré sensiblement au même niveau que le plot d'ancrage 7 sur la face interne 6 dudit secteur 5. La zone 11 est ainsi agencée à l'opposé du plot d'ancrage 7 du secteur 5 correspondant.

Ceci limite encore davantage la formation de retassures lors de la fabrication de la bague 4.

Les deux secteurs 5 sont ici articulés l'un à l'autre par une unique portion 12 annulaire déformable élastiquement, les deux secteurs 5 et la portion 12 étant d'un seul tenant. La portion 12 a ainsi un profil en arc-de-cercle pour épouser la surface externe de la canalisation. Les secteurs 5 forment ainsi respectivement des extrémités libres de la bague 4 qui est donc ouverte (la bague 4 ayant donc une forme de C).

Le montage de la bague 4 sur la canalisation se révèle particulièrement simple puisqu'il peut se faire d'une seule main, l'opérateur n'ayant qu'à écarter les deux secteurs 5 l'un de l'autre pour monter la bague 4 sur la canalisation 1. Ceci permet à l'opérateur de tenir la canalisation de l'autre main ou de se tenir par exemple à une échelle dans le cas d'une canalisation agencée en hauteur.

Les secteurs 5 et la portion 12 sont conformés de sorte que la bague 4 forme un arc de cercle de plus de 180 degrés lorsque la bague 4 est en position de repos c'est-à-dire lorsque la portion 12 n'est pas déformée.

Ceci limite le risque que la bague 4 se désolidarise de façon accidentelle de la canalisation.

Les secteurs 5 et la portion 12 sont conformés ici de sorte que les deux plots d'ancrage 7 soient en regard l'un de l'autre et centrés l'un par rapport l'autre lorsque la bague 4 est en position de repos. Il en résulte que les plots d'ancrage 7 sont diamétralement opposés lorsque la bague 4 est installée sur la canalisation à condition que les logements 8 soient également diamétralement opposés.

La portion 12 est de préférence conformée de sorte à être axialement et circonférentiellement déformable élastiquement.

Ainsi, si les deux logements 8 de la canalisation 1 ne sont pas parfaitement opposés et centrés l'un par rapport à l'autre, il reste possible de fixer malgré tout correctement la bague 4 à la canalisation 1. En effet, la portion 12 peut alors demeurer légèrement déformée lorsque la bague 4 est agencée sur la canalisation 1 pour rattraper les défauts d'alignement des deux logements 8.

Selon un mode de réalisation préféré, la portion 12 comporte des premières fentes 13 s'étendant axialement d'une première paroi latérale 14 de la portion 12 en direction de la deuxième paroi latérale 15 et des deuxièmes fentes 16 s'étendant axialement de la deuxième paroi latérale 15 en direction de la première paroi latérale 14.

La portion 12 est donc conformée en serpentin ce qui lui assure de pouvoir être déformée élastiquement. Il est ainsi possible de déformer la portion 12 en l'allongeant, la contractant mais également en l'inclinant pour compenser les défauts d'alignement des logements.

Le serpentin est composé de branches 17 qui s'étendent axialement et de bords 18 qui s'étendent circonférentiellement, deux branches consécutives 17 étant reliées par un bord 18 et deux bords 18 consécutifs étant reliés par une branche 17.

De préférence, la portion 12 comporte des doigts 19, chaque fente étant associée à l'un desdits doigts 19 de sorte que chaque doigt 19 s'étende circonférentiellement à travers la fente associée pour obturer en partie ladite fente.

Chaque doigt 19 s'étend ici de sorte à obturer partiellement l'extrémité ouverte de la fente associée c'est-à-dire que chaque doigt s'étend circonférentiellement dans le prolongement d'un des bords 18 du serpentin et en saillie dans l'ouverture de la fente.

Chaque doigt 19 a ici une longueur l_{d} (dimension mesurée selon une direction circonférentielle de la portion 12) inférieure à une largeur l_{b} (également définie selon une direction circonférentielle de la portion 12) de la fente s'étendant entre deux branches adjacentes du serpentin de telle manière que le passage laissé libre par le doigt 19 est inférieur à l'épaisseur E de la bague (mesurée hors plots d'ancrage 7).

De la sorte, lors de la manutention d'une pluralité de bagues 4 selon l'invention, les doigts 19 empêchent l'insertion des fentes les unes dans les autres ce qui limite le risque que les portions 12 des différentes bagues 4 s'emmêlent.

De préférence, la bague 4 est entièrement en matière plastique par exemple en matière plastique chargée en fibres de verre.

Les secteurs 5 et la portion 12 étant venus de matière il s'avère donc très simple de fabriquer la bague 4 par exemple par moulage.

Bien entendu l'invention n'est pas limitée au mode de réalisation décrit et on peut y apporter des variantes de réalisation sans sortir du cadre de l'invention tel que définie par les revendications.

En particulier, bien qu'ici les deux secteurs rigides soient articulés l'un à l'autre par une unique portion annulaire déformable élastiquement, les deux secteurs pourront être articulés l'un à l'autre par un nombre différent de portions annulaires déformables élastiquement. Par exemple, la bague pourra comporter deux portions annulaires élastiquement déformables articulant chacune les deux secteurs rigides entre eux de sorte que la bague forme un cercle fermé.

La bague pourra comprendre des moyens supplémentaires en plus des plots d'ancrage pour son blocage axial sur la canalisation de façon amovible tels que des plots escamotables.

Bien qu'ici la portion soit déformable élastiquement dans toutes les directions, la portion pourra être conformée pour n'être déformable que dans le sens circonférentiel (c'est-à-dire n'être qu'extensible et/ou contractile) ou n'être déformable élastiquement que dans le sens axial (c'est-à-dire n'être qu'inclinable).

## Revendications

1. Bague d'accrochage (4) d'une canalisation (1) à un corps tubulaire (2), la bague étant **caractérisée en ce qu'**elle comporte deux secteurs (5) rigides qui sont articulés l'un à l'autre par au moins une portion (12) annulaire déformable élastiquement, les deux secteurs et la portion étant d'un seul tenant, chaque secteur (5) ayant une face interne (6) en saillie de laquelle s'étend radialement au moins un plot d'ancrage (7) destiné à être reçu dans un logement (8) ménagé de façon correspondante dans une paroi de la canalisation, chaque plot d'ancrage (7) comportant deux rainures (9) s'étendant circonférentiellement de part et d'autre dudit plot d'ancrage.

2. Bague (4) selon la revendication 1, dans laquelle chaque plot d'ancrage (7) a une hauteur supérieure à une épaisseur (e) d'une paroi de la canalisation (1) et chaque rainure (9) a une largeur (h) au moins équivalente à l'épaisseur (e) de ladite paroi de la canalisation (1) pour permettre l'engagement de ladite paroi au moins en partie dans la rainure.

3. Bague (4) selon la revendication 1, comportant une unique portion (12) pour relier les secteurs (5), les secteurs formant respectivement des extrémités libres de la bague.

4. Bague (4) selon la revendication 1, dans laquelle les secteurs (5) et la portion (12) sont conformés de sorte que la bague soit ouverte et forme un arc de cercle de plus de 180 degrés lorsque la bague est en position de repos.

5. Bague (4) selon la revendication 1, dans laquelle la portion (12) est conformée de sorte à être axialement et circonférentiellement déformable élastiquement.

6. Bague (4) selon la revendication 1, dans laquelle la portion (12) comporte des premières fentes (13) s'étendant axialement d'une première paroi latérale (14) de la portion en direction d'une deuxième paroi latérale (15) de la portion, opposée à la première paroi latérale, et des deuxièmes fentes (16) s'étendant axialement de la deuxième paroi latérale en direction de la première paroi latérale de sorte que la portion soit conformée en serpentin.

7. Bague (4) selon la revendication 6, dans laquelle la portion (12) comporte des doigts (19), chaque fente étant associée à l'un desdits doigts de sorte que chaque doigt s'étende circonférentiellement à travers la fente associée pour obturer en partie ladite fente.

8. Bague (4) selon la revendication 7, dans laquelle chaque doigt (19) s'étend de sorte à obturer partiellement une extrémité ouverte de la fente associée.

9. Bague (4) selon la revendication 1, dans laquelle une face externe (10) de chaque secteur (5), opposée à la face interne (6) du secteur considéré, comporte une zone (11) partiellement évidée.

10. Bague (4) selon les revendications 1 et 9, dans laquelle chaque zone (11) partiellement évidée est agencée sur la face externe (10) du secteur (5) considéré sensiblement au même niveau que le plot d'ancrage (7) sur la face interne (6) dudit secteur.

11. Bague (4) selon la revendication 1, dans laquelle la bague est en matière plastique.

12. Bague (4) selon la revendication 11, dans laquelle la bague est en matière plastique chargée en fibres de verre.

13. Moyens de connexion d'une canalisation (1) à un corps tubulaire (2) ayant une extrémité agencée pour recevoir une extrémité de la canalisation, les moyens de connexion comprenant un manchon (3) divisé en des première et deuxième parties axialement successives pourvues de moyens pour assurer la liaison de ces parties étanche et démontable respectivement à l'extrémité du corps tubulaire et à la canalisation, **caractérisés en ce que** les moyens de connexion comprennent une bague (4) selon l'une des revendications précédentes.

## Patentansprüche

1. Ring (4) zur Befestigung einer Rohrleitung (1) an einem rohrförmigen Gehäuse (2), wobei der Ring **dadurch gekennzeichnet ist, dass** er zwei starre Sektoren (5) umfasst, die miteinander über mindestens einen elastisch verformbaren ringförmigen Abschnitt (12) gelenkig verbunden sind, wobei die beiden Sektoren und der Abschnitt zusammenhängend sind, wobei jeder Sektor (5) eine Innenseite (6) hat, von der mindestens ein Befestigungsklotz (7) radial absteht, der dazu bestimmt ist, in einer Aufnahme (8) aufgenommen zu werden, die auf entsprechende Weise in einer Wand der Rohrleitung ausgebildet ist, wobei jeder Befestigungsklotz (7) zwei Nuten (9) umfasst, die sich in Umfangsrichtung zu beiden Seiten des Befestigungsklotzes erstrecken.

2. Ring (4) nach Anspruch 1, bei dem jeder Befestigungsklotz (7) eine Höhe hat, die größer als eine Dicke (e) einer Wand der Rohrleitung (1) ist, und jede Nut (9) eine Breite (h) hat, die mindestens der Dicke (e) der genannten Wand der Rohrleitung (1) entspricht, um den Eingriff der Wand in die Nut zumindest teilweise zu gestatten.

3. Ring (4) nach Anspruch 1, umfassend einen einzigen Abschnitt (12), um die Sektoren (5) zu verbinden, wobei die Sektoren jeweils die freien Enden des Ringes bilden.

4. Ring (4) nach Anspruch 1, bei dem die Sektoren (5) und der Abschnitt (12) so geformt sind, dass der Ring offen ist und einen Kreisbogen von mehr als 180 Grad bildet, wenn der Ring in der Ruhestellung ist.

5. Ring (4) nach Anspruch 1, bei dem der Abschnitt (12) so geformt ist, dass er axial und in Umfangsrichtung elastisch verformbar ist.

6. Ring (4) nach Anspruch 1, bei dem der Abschnitt (12) erste Schlitze (13) umfasst, die sich axial von einer ersten Seitenwand (14) des Abschnittes in Richtung einer zweiten Seitenwand (15) des Abschnittes erstrecken, die der ersten Seitenwand gegenüberliegt, sowie zweite Schlitze (16), die sich axial von der zweiten Seitenwand in Richtung der ersten Seitenwand erstrecken, so dass der Abschnitt schlangenartig geformt ist.

7. Ring (4) nach Anspruch 6, bei dem der Abschnitt (12) Finger (19) umfasst, wobei jeder Schlitz einem der Finger zugeordnet ist, so dass sich jeder Finger in Umfangsrichtung durch den dazugehörigen Schlitz erstreckt, um den Schlitz teilweise zu verschließen.

8. Ring (4) nach Anspruch 7, bei dem sich jeder Finger (19) so erstreckt, dass er ein offenes Ende des dazugehörigen Schlitzes teilweise verschließt.

9. Ring (4) nach Anspruch 1, bei dem eine Außenseite (10) jedes Sektors (5), die der Innenseite (6) des betreffenden Sektors abgewandt ist, eine teilweise ausgesparte Zone (11) umfasst.

10. Ring (4) nach den Ansprüchen 1 und 9, bei dem jede teilweise ausgesparte Zone (11) auf der Außenseite (10) des betreffenden Sektors (5) im Wesentlichen auf dem gleichen Niveau wie der Befestigungsklotz (7) auf der Innenseite (6) des Sektors ausgebildet ist.

11. Ring (4) nach Anspruch 1, bei dem der Ring aus Kunststoff ist.

12. Ring (4) nach Anspruch 11, bei dem der Ring aus glasfaserverstärktem Kunststoff ist.

13. Mittel zur Verbindung einer Rohrleitung (1) mit einem rohrförmigen Gehäuse (2), das ein Ende hat, das ausgebildet ist, um ein Ende der Rohrleitung aufzunehmen, wobei die Verbindungsmittel eine Hülse (3) umfassen, die in erste und zweite axial aufeinanderfolgende Teile unterteilt sind, die mit Mitteln zum Sicherstellen der dichten und lösbaren Verbindung dieser Teile mit dem Ende des rohrförmigen Gehäuses bzw. der Rohrleitung versehen sind, **dadurch gekennzeichnet, dass** die Verbindungsmittel einen Ring (4) nach einem der vorhergehenden Ansprüche umfassen.

## Claims

1. A ring (4) for fastening a pipe (1) to a tubular body (2), the ring being **characterized in that** it comprises two rigid sectors (5) that are hinged to each other via at least one elastically deformable annular portion (12), both sectors and the portion being made as a single part, each sector (5) having an inside face (6) from which there projects radially at least one anchor pad (7) that is designed to be received in a housing (8) formed in corresponding manner in a wall of the pipe, each anchor pad (7) including two grooves (9) extending circumferentially on either side of said anchor pad.

2. A ring (4) according to claim 1, wherein each anchor pad (7) is of height that is greater than a thickness (e) of a wall of the pipe (1) and each groove (9) is of width (h) that is at least equivalent to the thickness (e) of said wall of the pipe (1) in order to enable the wall to engage in the groove at least in part.

3. A ring (4) according to claim 1, having a single portion (12) for connecting together the sectors (5), the sectors forming respective free ends of the ring.

4. A ring (4) according to claim 1, wherein the sectors (5) and the portion (12) are shaped in such a manner that the ring is open and forms a circular arc of more than 180 degrees when the ring is in the rest position.

5. A ring (4) according to claim 1, wherein the portion (12) is shaped in such a manner as to be elastically deformable axially and circumferentially.

6. A ring (4) according to claim 1, wherein the portion (12) includes first slots (13) extending axially from a first side wall (14) of the portion towards a second side wall (15) of the portion, opposite the first side wall, and second slots (16) extending axially from the second side wall towards the first side wall in such a manner that the portion is of sinuous shape.

7. A ring (4) according to claim 6, wherein the portion (12) includes fingers (19), each slot being associated with one of said fingers in such a manner that each finger extends circumferentially through the associated slot in order to close said slot in part.

8. A ring (4) according to claim 7, wherein each finger (19) extends in such a manner as to close in part an open end of the associated slot.

9. A ring (4) according to claim 1, wherein, opposite from its inside face (6), an outside face (10) of each sector (5) includes a partly-recessed zone (11).

10. A ring (4) according to claim 1 and claim 9, wherein each partly-recessed zone (11) is arranged on the outside face (10) of the sector (5) considered substantially at the same level as the anchor pad (7) on the inside face (6) of said sector.

11. A ring (4) according to claim 1, wherein the ring is made of plastics material.

12. A ring (4) according to claim 11, wherein the ring is made of plastics material filled with glass fibers.

13. Means for connecting a pipe (1) to a tubular body (2) having an end arranged to receive an end of the pipe, the connection means comprising a sleeve (3) subdivided into first and second portions in axial succession provided with means for connecting said portions in leakproof and releasable manner respectively to the end of the tubular body and to the pipe, the connection means being **characterized in that** they comprise a ring (4) according to any preceding claim.
